(19) Europäisches Patentamt
European Patent Office
Office européen des brevets

(11) Veröffentlichungsnummer: **0 002 532**
**B1**

(12) # EUROPÄISCHE PATENTSCHRIFT

(45) Veröffentlichungstag der Patentschrift: **26.08.81**

(21) Anmeldenummer: **78101699.3**

(22) Anmeldetag: **15.12.78**

(51) Int. Cl.³: **C 07 C 69/74,**
A 01 N 53/00,
C 07 C 67/08, C 07 C 67/10

(54) **Cyclopropancarbonsäure-naphthylmethylester, Verfahren zur Herstellung dieser Verbindung und deren Verwendung als Schädlingsbekämpfungsmittel.**

(30) Priorität: **21.12.77 LU 78736**

(43) Veröffentlichungstag der Anmeldung:
**27.06.79 Patentblatt 79/13**

(45) Bekanntmachung des Hinweises auf die Patenterteilung:
**26.08.81 Patentblatt 81/34**

(84) Benannte Vertragsstaaten:
**BE CH DE FR GB IT LU NL**

(56) Entgegenhaltungen:
**DE - A - 2 417 372**
**DE - A - 2 452 406**

(73) Patentinhaber: **F. HOFFMANN-LA ROCHE & CO. Aktiengesellschaft**
**CH-4002 Basel (CH)**

(72) Erfinder: **Suchy, Milos, Dr.**
**Grossplatzstrasse 3**
**CH-8122 Pfaffhausen (CH)**

(74) Vertreter: **Lederer, Franz, Dr. et al,**
**Patentanwälte Lederer, Meyer Lucile-Grahn-Strasse 22**
**D-8000 München 80 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

EP 0 002 532 B1

Cyclopropancarbonsäure-naphthylmethylester, Verfahren zur Herstellung dieser Verbindung und deren Verwendung als Schädlingsbekämpfungsmittel

Die Erfindung betrifft den Cyclopropancarbonsäure-2-naphthylmethylester der Formel

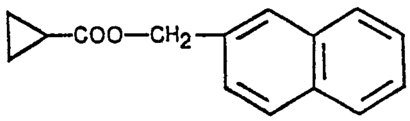
I

Die Verbindung der Formel I ist ein Schädlingsbekämpfungsmittel und eignet sich insbesondere zur Bekämpfung von Insekten und Acarinen. Somit umfasst die Erfindung auch Schädlingsbekämpfungsmittel, welche die Verbindung der Formel I enthalten sowie deren Verwendung.

Auch die deutsche Offenlegungsschrift 2 417 372 vom 9. April 1974 offenbart Cyclopropancarbonsäureester, z.B. Cylopropancarbonsäure-alkylester und -arylester, die sich als Wirkstoffe von Mitteln zur Bekämpfung von Milben eignen. Die erfindungsgemässe Verbindung unterscheidet sich von den bekannten also dadurch, dass die Aryl-(d.h. Naphthyl-)gruppe über eine Methylengruppe und nicht, wie im bekannten Fall, direkt an die Carbonyloxygruppe gebunden ist.

Ferner offenbart die deutsche Offenlegungsschrift 2 452 406 vom 5. Nov. 1974 generisch Cyclopropancarbonsäure-arylalkylester, die sich ebenfalls als Wirkstoffe von Mitteln zur Bekämpfung von Milben eignen. In dieser Offenlegungsschrift sind solche Ester jedoch spezifisch nirgends erwähnt.

Die Erfindung betrifft ferner ein Verfahren zur Herstellung der Verbindung der Formel I. Das erfindungsgemässe Verfahren ist dadurch gekennzeichnet, dass man

a) die Säure der Formel

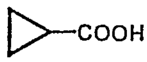
II

oder ein reaktionsfähiges Derivat dieser Saüre, mit einem Alkohol der Formel

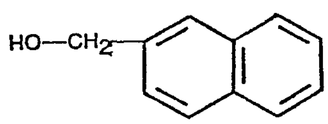
III

oder einem reaktionsfähigen Derivat dieses Alkohols, notwendigenfalls in Gegenwart einer Base umsetzt, oder

b) die Säure der Formel II mit einer Verbindung der Formel

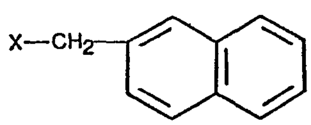
IV

worin X Chlor, Brom, Jod, Mesyloxy oder Tosyloxy bedeutet, umsetzt.

In einer Ausführungsform zur Herstellung von Cyclopropancarbonsäure-2-naphthylmethylester der Formel I wird eine Säure der Formel II oder ein reaktionsfähiges Derivat dieser Säure der Formel II mit einem Alkohol der Formel III umgesetzt.

Der Ausdruck "reaktionsfähiges Derivat der Säure" bedeutet ein Säurehalogenid, ein Säureanhydrid, ein Imidazolid oder einen Ester eines niedrig siedenden Alkohols, ein Alkalimetallsalz, ein Silbersalz oder ein Salz eines tertiären Amins. Als reaktionsfähiges Derivat des Alkohols können z.B. die Halogenide oder Sulfonsäureester verwendet werden.

Zur Herstellung des Cyclopropancarbonsäure-2-naphthyl-methylesters der Formel I wird die Veresterung der Säure der Formel II vorzugsweise in einem geeigneten inerten Lösungsmittel bei Raumtemperatur oder erhöhter Temperatur und unter geeigneten wasserabspaltenden Bedingungen, z.B. in Gegenwart von Dicyclohexylcarbodiimid oder durch azeotropes Abdestillieren des entsprechenden Wassers aus dem katalysierten Reaktionsgemisch durchgeführt. Bei Verwendung eines Säurehalogenids als reaktionsfähiges Derivat der Säure wird die Umsetzung mit dem Alkohol bei Raumtemperatur und in Gegenwart eines Säureacceptors, z.B. eines tertiären Amins, wie Pyridin oder Triäthylamin, durchgeführt. Man erhält in hoher Ausbeute den entsprechenden Ester. Als Säurehalogenide werden die Säurechloride bevorzugt. Die Umsetzung wird vorzugsweise in Gegenwart eines inerten Lösungsmittels durchgeführt, wie Benzol, Toluol oder Petroläther.

Bei Verwendung eines Esters aus der Säure der Formel II und einem niedrig siedenden Alkohol, wie Methanol oder Aethanol, als reaktionsfähiges Derivat der Säure kann der entsprechende Ester der Formel I durch Erhitzen des Esters mit dem Alkohol der Formel III in Gegenwart einer Base, vorzugsweise dem Alkalimetallalkoholat, das dem niedrig siedenden Alkohol des eingesetzten Esters entspricht, oder in Gegenwart von Natriumhydrid in einem inerten Lösungsmittel, wie Toluol, und unter Abtrennung des bei der Umsetzung freigesetzten niedrig siedenden Alkohols durch fraktionierte Destillation, hergestellt werden.

Der Ester der Formel I kann durch Umsetzen des Imidazolides einer Säure der Formel II mit dem Alkalimetallalkoholat des Alkohols der Formel III, oder des Alkohols mit einer katalytischen Menge des Alkalimetallalkoholats in guter Ausbeute hergestellt werden. Die Reaktion wird vorzugsweise in einem inerten Lösungsmittel, wie Tetrahydrofuran oder Dimethoxyäthan bei Raumtemperatur durchgeführt.

Bei Verwendung eines Säureanhydrids als reaktionsfähiges Derivat der Säure der Formel II kann der Ester der Formel I durch Umsetzen des Säureanhydrids mit dem Alkohol der Formel III bei Raumtemperatur oder vorzugsweise unter Erhitzen und in Gegenwart eines Lösungsmittels, wie Toluol oder Xylol, hergestellt werden.

In einer weiteren Ausführungsform des erfindungsgemässen Verfahrens wird die Säure der Formel II mit einem Halogenid oder Sulfonsäureester der Formel IV umgesetzt. Die Umsetzung erfolgt in einem organischen Lösungsmittel wie beispielsweise Aceton, Methyläthylketon, Diathylketon, Dimethylformamid, Dimethylsulfoxid, Benzol oder Toluol in Gegenwart einer Base, vorzugsweise Kaliumcarbonat, Diese Reaktion erfolgt vorzugsweise in einem Temperaturbereich zwischen 30°C und dem Siedepunkt des Lösungsmittels. Danach wird das Reaktionsgemisch zum Aufarbeiten in eine anorganische Säure gegossen, vorzugsweise in verdünnte Salzsäure, verdünnte Schwefelsäure, verdünnte Phosphorsäure oder verdünnte Salpetersäure. Die saure Lösung wird mit Hexan extrahiert und das Hexan abdestilliert. Der Rückstand wird an Kieselgel oder Aluminiumoxid chromatographiert und/oder destilliert.

Die vorliegende Erfindung betrifft auch pestizide Zusammensetzungen, die als aktiven Bestandteil die Verbindung der Formel I, wie oben definiert, enthalten. Die pestizide Zusammensetzung enthält zweckmässigerweise zumindest eines der folgenden Materialien: Trägerstoffe Netzmittel, inerte Verdünnungsmittel und Lösungsmittel.

Die vorliegende Erfindung betrifft ferner die Behandlung von Pflanzen, Tieren und des Erdbodens sowie von Gegenständen und Flächen, welche darin besteht, dass auf diese die Verbindung der Formel I, wie oben definiert, aufgebracht wird.

Die Verbindung der Formel I ist somit ganz allgemein als Pestizid wertvoll. Sie zeigt sich besonders wertvoll als Insektizid und Akarizid, insbesondere gegen saugende Schädlinge wie weisse Fliegen, Thrips und Spinnentiere wie beispielsweise Tetranychidae, Eriophyidae, Ixodoidea. Diese Verbindung wirkt vorwiegende als direktes Ovizid und reduziert auch längerfristig den Populationsanstieg. Die Verbindung hat systemische Aktivität. Die akarizide Wirkung stellt einen bevorzugten Aspekt der vorliegenden Verbindung dar.

Die Verbindung der Formel I ist im allgemeinen wasserunlöslich und kann nach irgendeiner der für unlösliche Verbindungen üblichen Methoden konfektioniert werden.

Wenn gewünscht, kann die Verbindung der Formel I in einem mit Wasser nicht mischbaren Lösungsmittel, wie beispielsweise einem hochsiedenden Kohlenwasserstoff, gelöst werden, das zweckmässigerweise gelöste Emulgatoren enthält, so dass es bei Zugabe zu Wasser als selbstemulgierbares Oel wirkt.

Die Verbindung der Formel I kann auch mit einem Netzmittel mit oder ohne inertes Verdünnungsmittel zur Bildung eines netzbaren Pulvers vermischt werden, welches in Wasser löslich oder dispergierbar ist, oder sie kann mit dem inerten Verdünnungsmittel zur Bildung eines festen oder pulverförmigen Produktes vermischt werden.

Inerte Verdünnungsmittel, mit welchen die Verbindung der Formel I verarbeitet werden kann, sind feste inerte Medien, einschliesslich pulverförmige oder feinverteilte Feststoffe, wie beispielsweise Tone, Sande, Talk, Glimmer, Düngemittel und dgl., wobei solche Produkte entweder staubförmige oder als Materialien mit grösserer Teilchengrösse vorliegen können.

Die Netzmittel können anionische Verbindungen, wie beispielsweise Seifen, Fettsulfatester, wie Dodecylnatriumsulfat, Octadecylnatriumsulfat und Cetylnatriumsulfat, fettaromatische Sulfonate, wie Alkylbenzolsulfonate oder Butylnaphthalinsulfonate, komplexere Fettsulfonate, wie die Amidkondensationsprodukte von Oelsäure und N-Methyltaurin oder das Natriumsalz von Dioctylsuccinat sein.

Die Netzmittel können auch nichtionische Netzmittel, wie beispielsweise Kondensationsprodukte von Fettsäuren, Fettalkoholen oder fettsubstituierten Phenolen mit Aethylenoxyd, oder Fettsäureester und -äther von Zuckern oder mehrwertigen Alkoholen oder die Produkte, die aus letzteren durch Kondensation mit Aethylenoxyd erhalten werden, oder die Produkte, die als Blockcopolymere von Aethylenoxyd und Propylenoxyd bekannt sind, sein. Die Netzmittel können auch kationische Mittel, wie beispielsweise Cetyltrimethylammoniumchlorid und dgl., sein.

Die pestizide Zusammensetzung kann auch in Form einer Aerosolverbindung vorliegen, wobei zweckmässigerweise zusätzlich zum Treibgas, welches geeigneterweise ein polyhalogeniertes Alkan, wie Dichlordifluormethan ist, ein Co-Solvens und ein Netzmittel verwendet wird.

Die pestiziden Zusammensetzungen, gemäss der vorliegenden Erfindung können zusätzlich zu der Verbindung der Formel I, Synergisten und andere aktive Insektizide, Bakterizide und Fungizide enthalten.

In ihren verschiedenen Anwendungsgebieten kann die erfindungsgemässe Verbindung in unterschiedlichen Mengenverhältnissen eingesetzt werden; so wird beispielsweise für die Behandlung von Pflanzen zur Bekämpfung von Schädlingen auf diesen die Verbindung zweckmässigerweise in einem Ausmass von etwa 100—2000 g/ha verwendet; für die Behandlung von Tieren zur Bekämpfung von Ectoparasiten wird das Tier zweckmässigerweise in eine Lösung, enthaltend 100—1000 ppm aktiver Verbindung, getaucht oder mit dieser besprüht.

Die Verbindung besitzt eine akute Toxizität von über 1000 mg/kg. Sie ist somit für Wirbeltiere äusserst wenig toxisch.

Ein weiterer Aspekt der vorliegenden Erfindung ist die hohe UV-Stabilität der Verbindung der Formel I.

Die folgenden Beispiele sollen die vorliegende Erfindung illustrieren.

Beispiel 1

2 g 2-Hydroxymethylnapththalin werden in 20 ml Benzol und 0,7 ml Pyridin gelöst. Nach Zugabe von 1,2 ml Cyclopropancarbonsäurechlorid in 10 ml Benzol wird die Mischung 15 Minuten auf 70°C erhitzt. Das Reaktionsprodukt wird in Wasser gegossen und mit Aether extrahiert. Der Aetherextrakt wird mit Wasser gewaschen, über Natriumsulfat getrocknet und unter vermindertem Druck eingedampft. Der zurückbleibende Cyclopropancarbonsäure-2-naphthylmethylester kann durch Adsorption an Kieselgel gereinigt werden. $n_D^{20}$: 1,5900.

Beispiel 2

1,7 g Cyclopropancarbonsäure werden in 20 ml Aceton gelöst, mit 0,9 g Pottasche versetzt und auf 55°C aufgeheizt. Danach werden 6,2 g 2-Brommethylnaphthalin zugegeben und die Mischung 12 Stunden auf 65°C erhitzt. Das Reaktionsprodukt wird in 150 ml 2 N HCl gegossen und mit Hexan extrahiert. Der Hexanextrakt wird mit Wasser gewaschen, über Natriumsulfat getrocknet und unter vermindertem Druck eingedampft. Der zurückbleibende Cyclopropancarbonsäure-2-naphthylmethylester kann durch Adsorption an Kieselgel gereinigt werden. $n_D^{20}$: 1,5900.

Beispiel 3

In einem Feldversuch in Valésia (Wallis) wurden am 5. Juli 1977 Apfelbäume (Starkrimson) mit Cyclopropancarbonsäure-2-naphthylmethylester behandelt. Cyclopropancarbonsäure-2-naphthylmethylester lag als benetzbares Pulver vor, die Wirkstoffkonzentration betrug 0,075%, die Brühemenge pro Hektar 2400 Liter. Die Parzellengrösse umfasste einen Apfelbaum und es wurden insgesamt vier Parzellen behandelt.

| | Durchschnittliche Anzahl Obstbaumspinnmilben/ Blatt (10 Blätter/Baum) 38 Tage nach der Behandlung | | | |
|---|---|---|---|---|
| | 1. | 2. | 3. | 4. Baum |
| Unbehandelt | 74,5 | 17,6 | 25,2 | 19,6 * |
| Cyclopropancarbonsäure-2-naphthylmethylester | 4,1 | 2,4 | 0,9 | 7,7 |
| Cyclopropancarbonsäure-hexa-decylester | 39,9 | 10,2 | 30,8 | 44,8 |

* Die wirtschaftlich tragbare Schadschwelle beträgt 8—10 Obstbaumspinnmilben pro Blatt

Nach WILCOXON's Test besteht ein signifikanter Unterschied zwischen der durchschnittlichen Anzahl Spinnmilben auf den mit Cyclopropancarbonsäure-2-naphthylmethylester behandelten Parzellen und den mit einem Standard behandelten Parzellen, hingegen keiner zwischen den mit dem Standard behandelten Parzellen und Unbehandelt (5% Niveau).

In den folgenden Beispielen 4 und 5 werden die nachstehenden Verbindungen verwendet:

Verbindung:

A

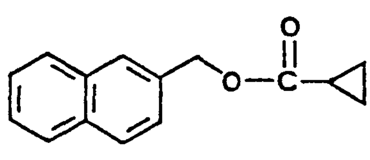

B

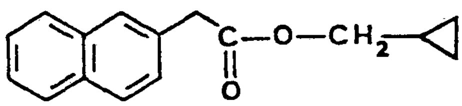

C

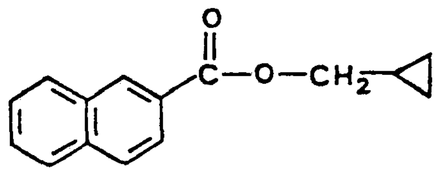

Beispiel 4

*TETRANYCHUS URTICAE* (UV-Persistenz)

Junge getopfte Buschbohnenpflanzen im Zweiblattstadium werden mit einer Aceton-Lösung des Workstoffes in definierter Dosierung besprüht. Nach der Behandlung werden die Pflanzen während 7 Tagen bei 28°C und UV-Licht (Philips TLA 40 W/05) inkubiert. Nach der Inkubation werden Pflanzenrondellen (Durchmesser 3 cm) mit 8—10 adulten Tieren infiziert. Einen Tag später werden die adulten Tiere entfernt und die Blattrondellen mit den Eiern bei 25°C und 60% Luftfeuchtigkeit gehalten. Unbehandelte und mit Aceton behandelte Pflanzen dienen als Kontrollen. Dauer des Tests: 6 Tage. Die Ergebnisse werden in %-Reduktion der Schlupfrate und der Ueberlebensrate der ersten Instar-Larven im Vergleich zu den Kontrollen ausgedrückt.

| Dosierung: | $10^{-5}$ g a.i./$cm^2$<br>% Aktivität (Durchschnitt von 10 Versuchen) | |
|---|---|---|
| Verbindung A | *95* | (100/100/94/100/84/90/84/100/100/100) |
| Verbindung B | *5* | (0/0/0/0/31/0/0/17/0/0) |
| Verbindung C | *5* | (0/0/24/0/0/0/26/0/0/0) |

(Wilcoxon-Test, p = 0,01)
a.i. = Wirkstoff

Beispiel 5

*TETRANYCHUS URTICAE*

Reduktion der Schlupfrate eines sensitiven Stammes

Buschbohnen mit einem gut entwickelten Blatt werden mit 10 weiblichen Tieren eines sensitiven Stammes von Tetranychus urticae infiziert. Nach Eiablage (2 Tage nach Infektion) werden die weiblichen Tiere entfernt und die Pflanze mit 20 ml einer wässerigen Emulsion des formulierten Wirkstoffes besprüht. 7 Tage nach Behandlung wird die Zahl der geschlüpften und ungeschlüpften Eier gezählt. Die Ergebnisse sind in nachstehender Tabelle zusammengefasst.

| | | % Reduktion der Schlupfrate | |
|---|---|---|---|
| Dosierung: | 0,1% | 0,03 | 0,01% a i |
| Verbindung A | 100 | 98 | 87 |
| | 100 | 97 | 86 |
| | 100 | 94 | 68 |
| | 99 | 91 | 34 |
| | 99 | 91 | 30 |
| | 99 | 80 | 14 |
| Verbindung B | 100 | 98 | 17 |
| | 100 | 98 | 16 |
| | 99 | 95 | 12 |
| | 98 | 83 | 6 |
| | 97 | 71 | 5 |
| | 86 | 64 | — |
| Verbindung C | 100 | 73 | 22 |
| | 98 | 71 | 12 |
| | 97 | 63 | 6 |
| | 96 | 59 | 3 |
| | 91 | 43 | 2 |
| | 85 | 2 | — |

Wilcoxon-Mann-Whitney (U-Test); p = 0,05; einseitig 0,1% ai ~ $10^{-6}$ g ai/cm$^2$
a i = Wirkstoff

Beispiel 6

Zur Herstellung eines emulgierbaren Konzentrates werden die nachstehend aufgeführten Bestandteile dieses Konzentrates miteinander vermischt:

| | |
|---|---|
| Verbindung der Formel I | 500 g |
| Mischung von Rizinusöl-Aethylenoxid-Kondensationsprodukt mit ca. 25 Mol Aethylenoxid und Ca/Dodecylbenzolsulfonat im Verhältnis 3:1 | 100 g |
| Epoxydiertes Soyaöl mit einem Oxiransauerstoffgehalt von ca. 6% | 25 g |
| Butyliertes Hydroxytoluol | 10 g |

Diese Mischung wird mit Xylol auf 1 Liter aufgefüllt.

**Patentansprüche**

1. Cyclopropancarbonsäure-2-naphthylmethylester.
2. Cyclopropancarbonsäure-2-naphthylmethylester als Schädlingsbekämpfungsmittel.
3. Cyclopropancarbonsäure-2-naphthylmethylester als Spinnentierebekaempfungsmittel.
4. Schädlingsbekämpfungsmittel, dadurch gekennzeichnet, dass es Cyclopropancarbonsäure-2-naphthylmethylester und inertes Trägermaterial enthält.
5. Spinnentierebekaempfungsmittel, dadurch gekennzeichnet, dass es Cyclopropancarbonsäure-2-naphthylmethylester und inertes Trägermaterial enthalt.
6. Verfahren zur Herstellung des Cyclopropancarbonsäure-2-naphthylmethylesters der Formel

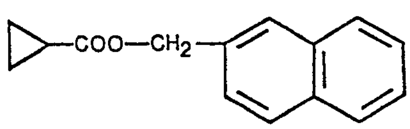

I

dadurch gekennzeichnet, dass man
a) die Säure der Formel

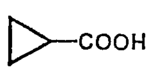

II

oder ein Reaktionsfaehiges derivat dieser saeure, mit einem Alkohol der Formel

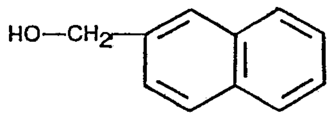

III

oder einem reaktionsfaehigen derivat dieses alkohols, notwendigenfalls in Gegenwart einer Base umsetzt, oder

b) die Säure der Formel II mit einer Verbindung der Formel

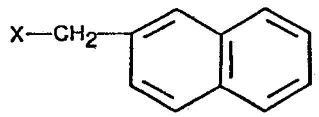

IV

worix X Chlor, Brom, Jod, Mesyloxy oder Tosyloxy bedeutet, umsetzt.

7. Verwendung von Cyclopropancarbonsäure-2-naphthylmethylester als Schädlingsbekämpfungsmittel.

8. Verwendung von Cyclopropancarbonsäure-2-naphthylmethylester als Spinnentierebekaempfungsmittel.

**Revendications**

1. 2-naphtylméthylester de l'acide cyclopropanecarboxylique.

2. 2-naphtylméthylester de l'acide cyclopropanecarboxylique comme agent de lutte anti-parasitaire.

3. 2-naphtylméthylester de l'acide cyclopropanecarboxylique comme agent de lutte contre les arachnides.

4. Agent de lutte anti-parasitaire, caractérisé en ce qu'il contient le 2-naphtylméthylester de l'acide cyclopropanecarboxylique et un support inerte.

5. Agent de lutte contre les arachnides, caractérisé en ce qu'il contient le 2-naphtylméthylester de l'acide cyclopropanecarboxylique et un support inerte.

6. Procédé de préparation du 2-naphtylméthylester de l'acide cyclopropanecarboxylique de formule:

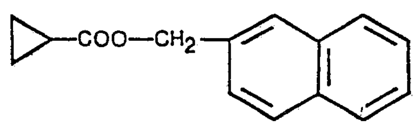

I

caractérisé en ce que:

a) on fait réagir l'acide de formule:

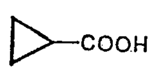

II

ou un dérivé réactif de cet acide, avec un alcool de formule:

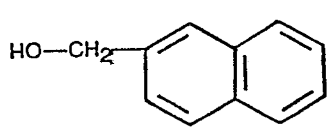

III

ou un dérivé réactif de cet alcool, si nécessaire en présence d'une base, ou

b) ou fait réagir l'acide de formule II avec un composé de formule:

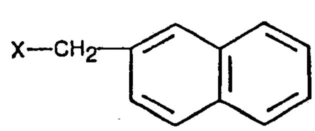

IV

où X représente un chlore, un brome, un iode, un mésyloxy ou un tosyloxy.

7. Application du 2-naphtylméthylester de l'acide cyclopropanecarboxylique comme agent de lutte anti-parasitaire.

8. Application du 2-naphtylméthylester de l'acide cyclopropanecarboxylique comme agent de lutte contre les arachnides.

**Claims**

1. Cyclopropanecarboxylic acid 2-naphthylmethyl ester.
2. Cyclopropanecarboxylic acid 2-naphthylmethyl ester as a pest control agent.
3. Cyclopropanecarboxylic acid 2-naphthylmethyl ester as an agent for the control of arachnida.
4. Pest control composition, characterised in that it contains cyclopropanecarboxylic acid 2-naphthylmethyl ester and inert carrier material.
5. Composition for the control of arachnida, characterised in that it contains cyclopropanecarboxylic acid 2-naphthylmethyl ester and inert carrier material.
6. Process for the manufacture of cyclopropanecarboxylic acid 2-naphthylmethyl ester of the formula

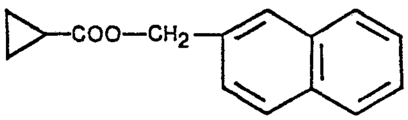

I

characterised in that
a) the acid of the formula

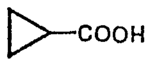

II

or a reactive derivative of this acid, is reacted with an alcohol of the formula

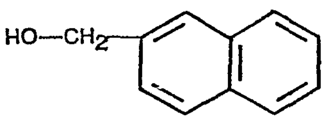

III

or a reactive derivative of this alcohol, if necessary in the presence of a base, or
b) the acid of formula II is reacted with a compound of the formula

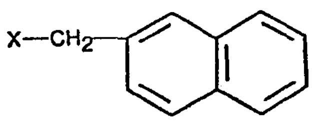

IV

wherein X signifies chlorine, bromine, iodine, mesyloxy or tosyloxy.
7. Use of cyclopropanecarboxylic acid 2-naphthylmethyl ester as a pest control agent.
8. Use of cyclopropanecarboxylic acid 2-naphthylmethyl ester as an agent for the control of arachnida.